# EUROPEAN PATENT SPECIFICATION

(11) **EP 1 060 636 B1**
(45) Date of publication and mention of the grant of the patent: **25.10.2006**
(21) Application number: 99909438.6
(22) Date of filing: 25.02.1999
(51) Int. Cl.: H04Q 11/04, H04Q 7/38

(54) **IMPROVEMENTS IN, OR RELATING TO, ATM MOBILE NETWORKS**
VERBESSERUNGEN FÜR MOBILE ATM-NETZE
AMELIORATIONS CONCERNANT DES RESEAUX ATM MOBILES

(30) Priority: 06.03.1998 SE 9800725
(43) Date of publication of application: 20.12.2000
(73) Proprietor: TELIA AB, 123 86 Farsta (SE)
(72) Inventor: LUNDGREN, Staffan, S-224 64 Lund (SE); LIND, Christer, S-241 95 Billinge (SE)
(74) Representative: Hopfgarten, Nils
(86) International application number: PCT/SE1999/000270
(87) International publication number: WO 1999/045740

(56) References cited:
- EP-A2- 0 708 571
- WO-A2-98/05181

## Description

The invention relates to a mobile Asynchronous Transfer Mode (ATM) network having an ATM Roaming Server (RS), a method for handling mobility in an ATM network, according to the preambles the of claims 1 and 11 respectively.

The Wireless ATM Working Group (WATM) is currently giving consideration to a location management architecture to support roaming in ATM networks. In essence, one faction within the WATM-group is advocating a solution similar to Mobile IP (Internet Protocol) and the other side is advocating a more PCS (Personal Cellular System)-like system with location registers. Two ATM Forum Contributions, namely, (a) A. Acharya, J. Li, D. Raychaudhuri, "Primitives for Location Management and Handoff in Mobile ATM Networks", ATM Forum Contribution, 96-1121, August 1996; and (b) A. Acharya, J. Li, D. Raychaudhuri, "Signalling Syntax Extensions for Location Management in Mobile ATM", ATM Forum Contribution, 96-1624, December 1996, propose location management mechanisms (the so called M-PNNI) which associate a Mobile Terminal (MT) with a home access ATM switch, i.e. an End user Mobility supporting ATM Switch (E-MAS). In essence, a M-PNNI (Mobile Private Network to Network Interface) is a PNNI (Private Network to Network Interface) which has been upgraded to handle mobile users, for example, handover and roaming functionality. PNNI is a protocol specified by the ATM Forum which is used by the switches in an ATM network. Each time the MT roams, i.e. changes access switch; the new location of the MT is notified to the home access switch via a previously set-up Virtual Circuit (VC), which is called the roaming VC in this patent specification. When the VC is set-up, the MT is authenticated with the home access switch.

Use of the foregoing location management mechanism in a roaming scenario, in which a Mobile Terminal (MT) moves from its home network to a visited network, is likely to give rise to the following problems:
- the VC from the MT to the home access switch does not involve the visited network in the authentication process, neither between the visited network and the MT, nor between the two networks;
- the roaming VC either occupies resources, for example, as a real time-VBR, or the signalling over the roaming VC has no delivery guarantee, for example, using UBR;
- handover of the roaming VC is required each time the MT changes access switch;
- distribution of the MTs associated data, for example, location data, service profiles, authentication data etc., to each MT's home access switch, increases the load on the management mechanism.

EP 708 571 discloses a system for distributed control in wireless cellular and personal communication systems that include separate servers for performing call control and connection control functions. During a registration procedure visitor location servers track only roaming terminals rather than tracking both roaming terminals and terminals located in their home network. Direct signalling links between servers and base stations or other servers, located in different networks, allow roaming terminals to contact their home networks for service at all times, thereby obviating the need for passing signalling information for terminals when they are not involved in a call.

It is an object of the present invention to provide an ATM mobile network architecture, which is adapted to control the signal load that occurs in a home network of a Mobile Terminal (MT) when the MT visits another network (roaming), through use of an ATM Roaming Server (RS).

It is another object of the present invention to provide a method for handling- mobility in an ATM network.

According to a first aspect of the present invention, there is provided, an ATM network, adapted to support mobile ATM end points (Mobile Terminals), including a number of Mobile Terminals (MTs); a core network of ATM switches; mobility management means including a Location Server (LS), said LS including a location database for said MTs and being adapted to provide location resolution; at least one mobility enhanced ATM switch (MAS); and an Access Point (AP) for said at least one MAS, said AP being adapted to provide radio connectivity between a MT and said ATM network and having, on the radio side thereof, at least one radio port and, on the network side thereof, an ATM interface and associated signalling channel towards said at least one MAS with switching capability, having the characterizing features of claim 1.

The at least one ATM RS may be adapted to handle mobility in said ATM network.

The at least one ATM RS may be adapted to enable a MT to visit, and roam within, another ATM network, without significantly increasing the signalling load on said MT's frame network. The at least one ATM RS may also be adapted to facilitate inter and intra mobility for access networks that do not have mobility management with location update for roaming MTs.

The at least one ATM RS may include an ATM switch having a location server associated therewith. The at least one ATM RS may also include a database adapted to store a network address for said LS, and mappings between network addresses (home addresses) and temporary addresses (visited network addresses) for each of said MTs. The database of the at least one ATM RS may be adapted to store an address of an authentication server.

Each MT may include a database adapted to store data relating to a network address for an ATM RS with which a respective MT is associated, and the MTs network address (home address), authentication key and access rights. The home address may include data concerning a MAS, in the MT's home network, with which the MT is associated. The database of each MT may be adapted to store temporary data, including the MT's current address, current Local Area Network, LAC, and current Radio Port idenfitication, RP_id.

The LS may include a database adapted to store data for each MT, and the network may be adapted to update the database of said LS with the location of a MT when the MT first moves to, and registers with, another network; the database of said at least one ATM RS being adapted to store subsequent location updates for the MT.

The data stored by the database of said LS may include the network address (home network address), current address (visited network address), user profile, including access rights, and location status. The data stored in said LS's database, for each MT, may also include billing information.

The ATM network may include a plurality of ATM RSs and be adapted to dynamically select that one of said plurality of ATM RSs considered by said ATM network to be best suited, at the particular time; to handle location mobility for a roaming mobile, terminal.

According to a second aspect of the present invention, there is provided a method for handling mobility in an ATM network, adapted to support mobile ATM end points (Mobile Terminals), said network including a number of Mobile Terminals (Mts); a core network of ATM switches; mobility management means including a Location Server (LS), said LS including a location database for said MTs and being adapted to provide location resolution; at least one mobility enhanced ATM switch (MAS); and an Access Point (AP) for said at least one MAS, said AP being adapted to provide radio connectivity between a MT and said ATM network and having, on the radio side thereof, at least one radio port and, on the network side thereof, an ATM interface and associated signalling channels towards said at least one MAS, with switching capability, having the characterizing features of claim 11.

The method may also be characterised by said at least one ATM RS handling mobility in said ATM network.

The method may characterised by said at least one ATM RS providing a facility that enables a MT to visit, and roam within, another ATM network, without significantly increasing the signalling load on said MT's home network.

The method may be further characterised by said at least one ATM RS facilitating inter and intra mobility for access networks that do not have mobility management with location update for roaming MTs.

The method may be characterised by said at least one ATM RS including a database; and by storing, in said database, data relating to a network address for said LS; and mappings between network addresses (home network addresses) and temporary addresses (visited network addresses) for each of said MTs. This method may be further characterised by storing an address for an authentification server in said database of said at least one ATM R.S. The method may be characterised by each MT including a database; by storing, in the database of each MT, data relating to a network address for an ATM RS with which a respective MT is associated, and the MT's network address (home address), authentication key and access rights; and by stored data relating to a home address including data concerning a MAS, in the MT's home network, with which a respective MT is associated. This method may be further characterised by storing temporary data in the database of each MT, said temporary data including the MT's current address, current LAC and current RP_id.

The method may also be characterised by said LS including a database for storing data for each MT; by updating said LS's database with the location of a MT, when the MT first moves (roams) to, and registers with, another network; and by storing subsequent location updates for said roaming MT in the database of said at least one ATM RS.

The method may be further characterised by storing the following data in said LS's database, for each of said MTs, a network address (home network address); a current address; user profile, including access rights; and location status. The method may be further characterised by storing billing information, for each MT, in the database of said LS.

A method, according to the present invention, for handling location updates in a MTs home network, when said MT first visits another network (visited network), may be characterised by said MT registering with said visited network by transmitting a location update signal to a first MAS of said visited network via a Radio Port (RP) of said first MAS's Access Point (AP); by said first MAS, on receipt of the signal from said MT, sending a location update signal to an ATM RS with which said MT is associated in said home network; by said ATM RS; on receipt of said location update signal by updating its database with a temporary address for said MT; and by sending a location update signal to said home network's Location Server (LS).

A method, according to the present invention, for handling location updates in a MT's home network, when said MT has registered with a visited network and moves (roams) between first and second MASs in said visited network, may be characterised by said MT having a temporary address, stored in a database thereof, that identifies a network address of an ATM RS with which said MT is associated in its home network; by said MT, on moving from said first to said second MAS, sending a location update signal to said second MAS via a Radio Port (RP) of said second MAS's Access Point (AP); by said second MAS, on receipt of the signal from said MT, sending a location update signal to said ATM RS in said home network; and by said ATM RS, on receipt of this information, updating its database with the temporary address for said MT, location update of said home network's LS not being necessary when said MT has been registered with, and is roaming within, said visited network.

The method may be characterised by said ATM mobile network providing a plurality of ATM RSs for handling location mobility; and by dynamically selecting that one of said plurality of ATM RSs considered by said ATM network to be best suited, at the particular time, to handle location mobility for a roaming MT. The method may be further characterised by said home network being adapted to dynamically redirect incoming location updates, for a roaming MT, from an ATM RS, with which said MT is presently associated in said home network, to another ATM RS best suited to handle location updates for said MT. The method may be further characterised by said roaming MT sending said location update signal, in a manner as claimed in claim 22, or claim 23, from the visited network to said ATM RS in said home network with which said roaming MT is presently associated; by said home network, in response to receipt of said location update signal from said roaming MT, sending said roaming MT a location update reply containing a home network address for use by said roaming MT the next time it sends a location update signal to said home network; and by said home network address, contained in said location update reply, being an address for an ATM RS best suited, at the particular time, to handle location mobility for said roaming MT.

According to a third aspect of the present invention, there is provided, a method for setting up a call from a Fixed Terminal (FT) of a Private Network to Network Interface, PNNI network, without mobility support, to a MT of an ATM mobile network, as outlined in preceding paragraphs, when said MT is visiting another network, characterised by said FT sending a call setup message to a MAS in said home network with which said MT is associated; by said home network MAS, on receipt of said message from said FT, sending an enquiry to said home network's Location Server (LS), concerning the present location of said MT; by said LS, in response to said enquiry, sending said home network MAS the network address information of an ATM RS in said home network with which said MT is associated; by said home network MAS, on receipt of the address information, sending a call setup message to said ATM RS; by said ATM RS, on receipt of the said call setup message, checking its database to find the present address of said MT and, on finding the address, sending a call setup message to a MAS in said visited network with which said MT is currently associated; and, on receipt of said call setup message, by said visited network MAS setting up the call from said FT to said MT.

The foregoing and other features of the present invention will be better understood from the following description with reference to the accompanying drawings, in which:
Figure 1 diagrammatically illustrates, in the form of a block diagram, a location update arrangement for an ATM mobile network;
Figure 2 diagrammatically illustrates, in the form of a block diagram, call setup for the ATM mobile network of Figure 1; and
Figure 3 diagrammatically illustrates, in the form of a block diagram, a location update arrangement for an ATM mobile network architecture, according to the present invention; and
Figure 4 diagrammatically illustrates, in the form of a block diagram, call setup for the ATM mobile network of Figure 3.

In order to facilitate an understanding of the present invention a glossary of terms used in this patent specification is provided below:
- AESA:ATM: End System Address
- AP:: Access Point
- ATM:: Asynchronous Transfer Mode
- AUS:: Authentication Server
- E-MAS:: End user Mobility supporting ATM Switch
- ESI:: End System Identifier
- FT:: Fixed Terminal
- IP:: Internet Protocol
- LAC:: Local Area Network
- LS:: Location Server
- MAS:: Mobility Enhanced ATM Switch
- M-PNNI:: Mobile PNNI
- MT:: Mobile Terminal
- PCS:: Personal Cellular System
- PNNI:: Private Network to Network Interface
- RP_id:: Radio Port identification
- RS:: ATM Roaming Server
- TDMA:: Time Division Multiple Access
- UBR:: Unspecified Bite Rate
- VBR:: Variable Bit rate
- VC:: Virtual Circuit
- VP:: Virtual Path

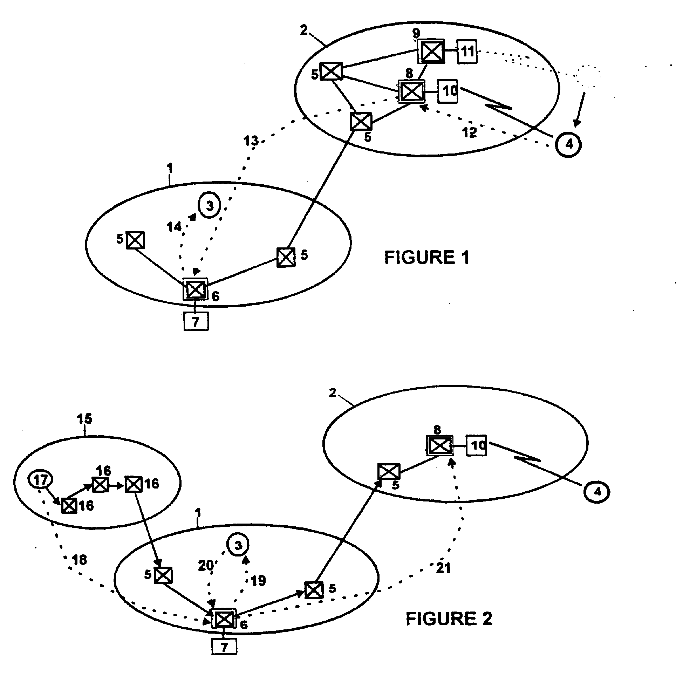

An ATM mobile network architecture is diagrammatically illustrated, in the form of a block diagram, in Figure 1 of the accompanying drawings, and includes two ATM network 1 and 2, each one of which includes a number ATM switches but only one of which, i.e. the network 1, includes mobility management with a Location Server (LS) 3. The mobility management may be a centralized arrangement. The network 1 is the home network for a Mobile Terminal (MT) 4. A Mobile Terminal (MT) is an ATM end point with a mobility capability. With the arrangement of Figure 1, MT 4 is visiting the network 2 and is moving between access switches.

In practice, the Location Server (LS) 3, which is a functional entity consisting of location databases and adapted to provide location resolution, may be implemented in a stand-alone physical entity, or be an integral part of an ATM switch.

The home network 1 and visited network 2 both include a core network of ATM switches, such as the ATM switches 5. The home network 1 also includes a Mobility Enhanced ATM Switch (MAS) 6 having an Access Point (AP) 7 adapted to provide radio connectivity into the switched ATM network. In practice, the home network 1 may include a number of MASs having radio access capabilities. The visited network 2 includes two Mobility Enhanced ATM switches 8 and 9, respectively having Access Points 10 and 11.

An Access Point (AP) is a device which has:
- on the radio side, one, or more, Radio Ports (RPs); and
- on the network side, an ATM interface and associated signalling channels towards the ATM network with switching capability.

The AP is viewed by the ATM network as a VP (Virtual Path) multiplexer with a number of virtual ports, each port corresponding to a Mobile Terminal (MT) active on one of the Radio Ports.

A Radio Port (RP) is a single logical point providing radio access. In a typical TDMA (Time Division Multiple Access) system, a radio port corresponds to a single TDMA carrier. In the radio environment, each RP can be identified by a unique broadcast identifier.

The data stored in MT 4 includes, inter alia:
- Home Address, i.e. data concerning the access switch with which the MT is associated in its home network;
- Authentication Key; and
- Access Rights.

The Mobile Terminal (MT) 4 may also be adapted to store temporary data, including, inter alia:
- Current LAC;
- Current Address; and
- Current RP_id.

The data stored in Location Server 3, for each Mobile Terminal (MT), includes, inter alia:
- Home Address;
- Current Address;
- User Profile including access rights;
- Location status; and
- Billing Information - this may, in practice, be handled by a separate entity.

Consider the case where MT 4 moves (roams) from its home network 1 and visits network 2 which, as stated above, has no centralized mobile management with a location server facility. Each time MT 4 moves within the visited network 2, i.e. the mobile terminal changes the MAS/AP via which it is connected to the visited network, the Location Server 3 in the home network 1 must be updated in order to ensure that incoming calls to the home network 1, for MT 4, are correctly routed to the mobile terminal. The need to notify the Location Server 3 in the home network 1 of the location of MT 4, each time the access switch is changed in the visited network 2, results in the signal loading in the home network 1 being increased by a significant amount. In other words, a significant signal loading is transferred to the home network 1 each time MT 4 exchanges its access switch in the visited network 2.

The procedure for location update will now be described with reference to Figure 1, i.e. the procedure for indicating, from a network visited by a MT to the home network of the MT, the actual location of the MS.

Consider the case where MT 4, currently visiting network 2, is accessing the network via a Radio Port (RP) of AP 11 and MAS 9, and moves (roams) within the visited network 2, such that network access is now being obtained via a RP of AP 10 and MAS 8. Since the data stored by MT 4 includes its home address, i.e the address of the access switch, such as MAS 6, with which the MT is associated in its home network, MT 4 is adapted to transmit this information to MAS 8, via a RP of AP 10. On receipt of this information, MAS 8 sends the location update information for MT 4 to the home network, i.e. to the Location Server 3 of the home network 1 via MAS 6. In Figure 1, the location update signals are shown as dotted lines and the connections between the ATM switches are shown as full lines.

The addresses for MT 4 and the Access Switches, are as follows:
- the home network address of MT 4 is 'C.2.1.1';
- the address of MAS 6, i.e. the access switch in the home network with which MT 4 is associated, is 'C.2.1; and
- the address of the access switches, MAS 8 and MAS 9 in the visited network 2 are respectively 'B.3.3' and 'B.3.1';

As illustrated in Figure 1, the location update procedure includes the following steps:
- MT 4 sends a signal 'Loc_Update (C.2.1.1, Authentication data)' to MAS 8 via a RP of AP 10 (see dotted line 12);
- on receipt of the signal from MT 4, MAS 8 sends a signal 'Loc_Update_Home (C.2.1.1, Authentication data, B.3.3)' to MAS 6 (see dotted line 13); and
- MAS, 6, on receipt of the signal from MAS 8, sends a signal 'Loc_Update_LS (C.2.1.1, B.3.3)' to Location Server 3 (see dotted line 14).

The setting up of a call to MT 4 will now be described with reference to Figure 2 of the accompanying drawings. The ATM mobile network architecture of Figure 2 includes the home network 1 and part of the visited network 2 of Figure 1, and a PNNI (Private Network to Network Interface) network 15, without mobility support. The PNNI network of Figure 2 includes a number of ATM switches 16 and a Fixed Terminal (FT) 17 which is a fixed, non-mobility aware, standard ATM end point. The address for FT 17 is 'A.1.1.0'. The PNNI is a protocol specified by the ATM protocol which is used by the switches of an ATM network. Despite its name, PNNI may be used in a public network.

The procedure for handling the setting up of a call, from FT 17 to MT 4, includes the following steps:
- a message 'SETUP(C.2.1.1, A.1.1.0)' is sent (see dotted line 18) from FT 17 to C.2.1 (MAS 6), i.e. the access switch with which MT 4 is associated in its home network 1;
- on receipt of this message, MAS 6 sends an enquiry (see dotted line 19) to LS 3, in the home network 1, concerning the present location of MT 4;
- in response to this enquiry, LS 3 sends (see dotted line 20) MAS 6 the address of the access switch of the visited network 2 with which MT 4 is currently associated - in the present example, the address is 'B.3.3' (MAS 8);
- on receipt of the location information, MAS 6 sends (see dotted line 21) a message 'SETUP(B.3.3, A.1.1.0, C.2.1.1) to MAS 8; and
- on receipt of this message, MAS 8 sets up the call from FT 17 to MT 4 via physical connections between the ATM switches of networks 15, 1 and 2, (including the ATM switches of MAS 6 and MAS 8) and finally by radio communication between a Radio Port (RP) of AP 10 and MT 4, i.e. the route indicated by the solid lines in Figure 2. The detailed procedure for effecting the physical connections is well known to persons skilled in the art and will not, therefore, be addressed by this patent specification.

In accordance with the present invention, the signal loading problems, referred to above, which occur in the home network of a Mobile Terminal (MT) when it visits another network, i.e. roaming, are overcome by using at least one ATM Roaming Server (RS) in the home network. It will be seen from the subsequent description that the use of an ATM Roaming Server (RS) in the home network effectively guards the home network from location updates.

The ATM Roaming Server (RS) of the present invention includes a database in which is stored the address of the home network's Location Server (LS), the mappings between the home addresses and temporary addresses of the Mobile Terminals (MT), and the address of an authentication server. The ATM Roaming Server (RS) is adapted to terminate location updates from a visited network.

In accordance with the present invention, the Location Server (LS) of the home network need only be updated the first time a Mobile Terminal (MT) moves (roams) in a visited network. It is not necessary to update the LS in the home network when the Mobile Terminal (MT) moves from one access switch to an other access switch in the visited network; it is only the ATM Roaming Server (RS) which has to be updated.

The Location Server (LS) 3 in the home network 1 includes a database which stores, inter alia, data for each Mobile Terminal (MT) belonging to the home network. As stated above, the data stored in Location Server 3, for each MT, includes its home address, current address, user profile (including access rights), location status and billing information.

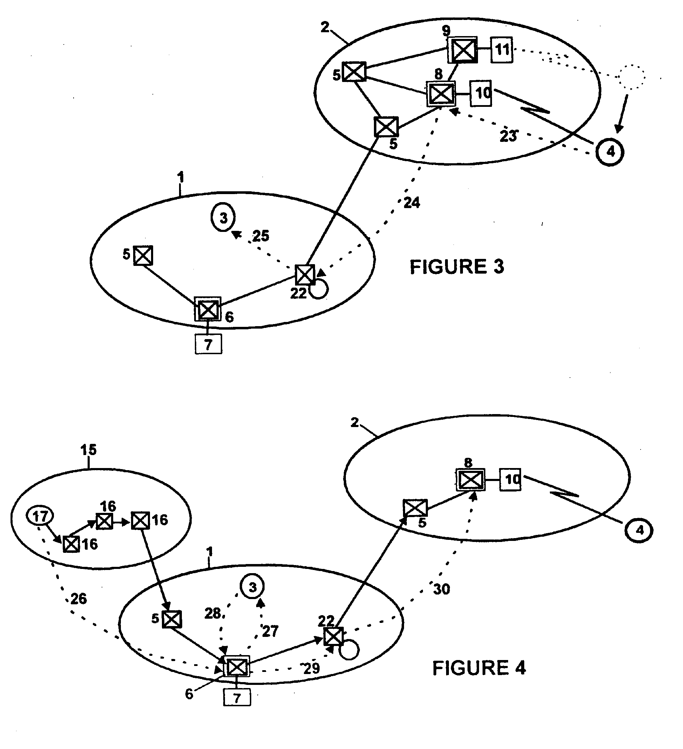

When a MT moves (roams) from its home network to another network (visited network), the LS is updated by the ATM Roaming Server with information regarding the MT's temporary (current) address. The MT stores the address of an ATM Roaming Server (RS), in its home network, with which it is associated, and the temporary address (visited network address) for the MT identifies the address of the associated ATM RS. As stated above, the home network may include more than one ATM RS. The database of the ATM Roaming Server (RS) stores data that indicates the location, in a visited network, where an incoming call to the home network for a MT should be transferred, i.e. the access switch in the visited network to which a call for a MT should be redirected during call setup. This data is transmitted to the ATM Roaming Server (RS) at location update. The update procedure for the ATM mobile network of the present invention will now be described with reference to Figure 3 of the accompanying drawings.

The only difference between the architecture of the ATM mobile network, diagrammatically illustrated, in the form of a block diagram, in Figure 3, and the network architecture illustrated in Figure 1, is that one of the ATM switches 5 of Figure 1 is replaced, in Figure 3, by an ATM Roaming Server (RS) 22 having the address 'C.1.1'.

When MT 4 moves (roams) from MAS 9 to MAS 8, as illustrated in Figure 3, the location update procedure includes the following steps:
- MT 4 which, as stated above, stores address information for ATM RS 22, sends a signal 'Loc_Update (C.2.1.1, Authentication data, C1.1)' to MAS 8 via a RP of AP 10 (see dotted line 23);
- on receipt of the signal from MT 4, MAS 8 sends a location update signal 'Loc_Update_Home (C.2.1.1, Authentication data, B.3.3)' to ATM RS 22 (see dotted line 24);
- on receipt of this information, ATM RS 22, updates its database, which contains information concerning the home address of MT 4, with the temporary address for MT 4; and
- in the event that the location update information, received from MAS 8, is being sent for the first time, i.e. relates to registration of MT 4 with the visited network, ATM RS 22 sends a signal 'Loc_Update_LS (C.2.1.1, C.1.1)' to LS 3 (see dotted line 25) - this signal is not sent to LS once registration has been effected and MT 4 is roaming within the visited network, i.e. moving from one access switch to another access switch in the visited network.

Thus, when MT 4 first visits another network, for example, visited network 2, the method, according to the present invention, for handling location update in the home network 1, includes the steps of:
- MT 4 registering with the visited network 2 by transmitting a location update signal to MAS 8 of visited network 2 via a Radio Port (RP) of Access Point (AP) 10;
- MAS 8, on receipt of the signal from MT 4, sending a location update signal to ATM RS 22 in the home network 1;
- ATM RS 22, on receipt of the location update signal:
   - updating its database with a temporary address for MT 4; and
   - sending a location update signal to the home network's Location Server (LS) 3.

It will be seen from the foregoing description of an ATM mobile network of the present invention that, when a Mobile Terminal (MT) moves (roams) within a visiting network, the location update information is only transmitted to the ATM Roaming Server (RS) to enable the ATM RS to update its database and thereby the mappings between the MT's home address and temporary address. With this arrangement, there is no need to update the home network's Location Server (LS), thereby effecting a reduction in the signalling load on the MT's home network. In other words, in the absence of an ATM RS, each location update for a MT, received by a MAS with which the MT is associated in its home network, would have to be sent to the home network's Location Server (LS), whereas the use of an ATM RS guards the home network from location updates, i.e. it is only necessary to update the database of the LS when a roaming MT first registers with a visited network.

The setting up of a call from a Fixed Terminal (FT) to a Mobile Terminal (MT), using an ATM Roaming Server (RS), will now be described with reference to Figure 4 of the accompanying drawings. The ATM mobile network architecture of Figure 4 includes the home network 1 and part of the visited network 2 of Figure 3, and the PNNI (Private Network to Network Interface) network 15, without mobility support, of Figure 2 of the accompanying drawings. As with Figure 2, the address for the Fixed Terminal (FT) 17 of Figure 4 is 'A.1.1.0'.

The procedure for handling the setting up of a call, from FT 17 to MT 4, is illustrated in Figure 4 and includes the following steps:
- a message 'SETUP(C.2.1.1, A.1.1.0)' is sent (see dotted line 26) from FT 17 to C.2.1 (MAS 6), i.e. the access switch with which MT 4 is associated in its home network 1;
- on receipt of this message, MAS 6 sends an enquiry (see dotted line 27) to LS 3, in the home network 1, concerning the present location of MT 4;
- in response to this enquiry, LS 3 sends (see dotted line 28) MAS 6 the address of the ATM RS 22 - in the present example, the address is 'C.1.1';
- on receipt of the address information, MAS 6 sends (see dotted line 29) a message 'SETUP(C.1.1, A.1.1.0, C.2.1.1) to ATM RS 22; and
- on receipt of this message, ATM RS 22 checks its database to determine the present address of MT 4 - in the present example, the address for MT 4 is 'B.3.3' (MAS 8);
- ATM RS 22 sends (see dotted line 30) a call setup message 'SETUP(B.3.3, A.1.1.0, C.2.1.1) to MAS 8; and
- on receipt of this message, MAS 8 sets up the call from FT 17 to MT 4 via the physical connections between the ATM switches of networks 15, 1 and 2, (including the ATM switches of MAS 6 and ATM Roamer Server 22) and finally by radio communication between a Radio Port (RP) of AP 10 and MT 4, i.e. the route indicated by the solid lines in Figure 4. The detailed procedure for effecting the physical connections is well known to persons skilled in the art and will not, therefore, be addressed by this patent specification.

Although the ATM mobile network of the present invention has been described in relation to a single ATM Roaming Server (RS), the home network may, in practice, use a number of these servers. Each of the Mobile Terminals, associated with the home network, stores address information for the ATM Roaming Server (RS) to which location updates should be sent.

In some instances, an ATM Roaming Server, with which a roaming mobile terminal is associated in its home network may not be suitably located with respect to the ATM network being visited by the mobile terminal. As a consequence of this, the ATM mobile network of the present invention is adapted to provide a dynamic, and more optimal way, of using ATM Roaming Servers. In essence, the only information a mobile terminal needs to have, in advance of visiting another ATM network, is an address to an ATM Roaming Server, or another entity with the same functionality, in the home network

Thus, an ATM mobile network of the present invention is adapted to dynamically point out which of a number of ATM Roaming Server is the most suitable server to use. The ability to select the most suitable ATM Roaming Server increases the functionality of the ATM mobile network.

The dynamic selection of the most suitable ATM Roaming Server (ATM RS) is effected by the mobile terminal, MT 4, announcing its new location in accordance with the following method:
(1) The mobile terminal, MT 4, sends a Location Update signal, in a manner as outlined above for location updates, from the visited network to the ATM Roaming Server with which it is associated in the home network.
(2) In response to receipt of the Local Update signal, the home network sends MT 4 a 'Location Update Reply' signal containing a home network address for use by MT 4 the next time it sends a Location Update signal to the home network.
(3) The home network address to which MT 4 must send the next Location Update signal, is an address for an ATM RS considered by the home network to be the most suitable, at the particular time, for handling location updates for MT 4.

It will be seen from the foregoing that the method for dynamically selecting an ATM RS is:
- for use in association with a home network having a number of ATM RSs; and
- is adapted to redirect incoming location updates, for a roaming mobile terminal, from an ATM RS, with which the mobile terminal is presently associated in the home network, to a new ATM RS by sending the roaming mobile terminal, in response to a Location Update signal, an address for a new ATM RS.

It will be directly evident to persons skilled in the art that the ATM Roaming Server (RS) of the present invention can be used in a number of applications, for example, such a server can be used for handling mobility in ATM systems, for instance, it can be used in systems to provide the means to enable ATM terminals to visit another network without introducing a large signalling load on the home network of the ATM terminals.

The ATM Roaming Server is also adapted to facilitate inter and intra mobility for access networks that do not have their own location servers. For example, the ATM Roaming Server could be used in the case where Telia connects private ATM wireless ATM access networks and the mobility is managed within Telia's public network.

## Claims

1. An ATM network, adapted to support mobile ATM end points including a number of Mobile Terminals (4), MTs; a core network of ATM switches (5), mobility management means including a Location Server (3), LS, said LS (3) including a location database for said MTs and being adapted to provide location resolution; at least one mobility enhanced ATM switch (6), MAS; and an Access Point (7), AP, for said at least one MAS (6), said AP (7) being adapted to provide radio connectivity between a MT (4) and said ATM network and having, on the radio side thereof, at least one radio port and, on the network side thereof, an ATM interface and associated signalling channels towards said at least one MAS (6) with switching capability, **characterized in that** said ATM network includes at least one ATM Roaming Server (22), RS, adapted to handle location updates for a roaming MT (4), thereby effecting a reduction in the signalling load on said MT's home network (1) for handling location updates in a MT's home network (1), when said MT (4) first visits another visited network (2),
- said MT (4) registering with said visited network (2) by transmitting a location update signal to a first MAS (8) of said visited network via a Radio Port, RP, of said first MAS's AP (10),
- said first MAS (8) on receipt of the signal from said MT (4), sending a location update signal to an ATM RS with which said MT (4) is associated in said home network (1),
- said ATM RS (22), on receipt of said location update signal:
- updating its database with a temporary address for said MT (4); and
- sending a location update signal to said home network's (1) LS (3).

2. An ATM network as claimed in claim 1, **characterized in that** said at least one ATM RS includes an ATM switch having a location server associated therewith.

3. An ATM network as claimed in claims 1 or 2, **characterized in that** said at least one ATM RS includes a database adapted to store a network address for said LS (29) and mappings between network addresses and temporary visited network addresses for each of said MT's.

4. An ATM network as claimed in claim 3, **characterized in that** said database of said at least one ATM RS (22) is adapted to store an address of an authentication server.

5. An ATM network as claimed in any preceding claim, **characterized in that** each MT (4) includes a database adapted to store data relating to a home network address for an ATM RS (22) with which a respective MT is associated, and the MT's home network address, authentication key and access rights, and **in that** said home network address includes data concerning a MAS (6) in the MT's home network (1), with which the MT (4) is associated.

6. An ATM network as claimed in claim 5, **characterized in that** said database of each MT is adapted to store temporary data, including the MT's current address, current Local Area Network, LAC, and current Radio Port identification, RP-id.

7. An ATM network as claimed in any preceding claim, **characterized in that** said LS (3) includes a database adapted to store data for each MT (4), and **in that** said network is adapted to update the database of said LS (3) with the location of a MT (4) when the MT (4) first moves to, and registers with, another network, the database of said at least one ATM RS (22) being adapted to store subsequent location updates for the MT (4).

8. An ATM network as claimed in claim 7, **characterized in that** data stored in the database of said LS (3) includes the home network address, current visited network address, user profile, including access rights, and location status.

9. An ATM network as claimed in claim 8, **characterized in that** data stored in said LS's database, for each MT (4), includes billing information.

10. An ATM network as claimed in any of the preceding claim, **characterized in that** ATM network includes a plurality of ATM RSs (22) and is adapted to dynamically select that one of said plurality of ATM RSs considered by said ATM network to be best suited, at the particular time, to handle location mobility for a roaming mobile terminal (4).

11. A method for handling mobility in an ATM network, adapted to support mobile ATM end points, said network including:
- a number of mobile terminals (4),
- a core network of ATM switches (6);
- mobility management means including a Location Server (3), LS, said LS (3) including a location database for said MTs and being adapted to provide location resolution;
- at least one mobility enhanced ATM switch (6), MAS; and
- an Access Point (7), AP, for said at least one MAS (6), said AP (7) being adapted to provide radio connectivity between a MT and said ATM network and having, on the radio side thereof, at least one radio port and, on the network side thereof, an ATM interface and associated signalling channels towards said at least one MAS with switching capability,
**characterized by** said ATM network providing at least one ATM Roaming Server (22), RS, for handling location updates for a roaming MT (4), thereby effecting a reduction in the signalling load on said MT's home network (1) for handling location updates in a MT's home network (1), when said MT (4) first visits another visited network (2) and by:
- said MT (4) registering with said another network (2) by transmitting a location update signal to a first MAS (8) of said visited network (2) via a Radio Port, RP, of said first MAS's Access Point (10), AP;
- said first MAS (8), on receipt of the signal from said MT (4), sending a location update signal to an ATM RS (22) with which said MT (4) is associated in said home network (1);
- said ATM RS (22), on receipt of said location update signal:
- updating its database with a temporary address for said MT (4); and
- sending a location update signal to said home network's Location Server (3), LS.

12. A method as claimed in claim 11, **characterized by** said at least one ATM RS handling mobility in said ATM network.

13. A method as claimed in claim 11, **characterized by** said at least one ATM RS providing a facility that enables a MT (4) to visit, and roam within, another ATM network (2), without significantly increasing the signalling load on said MT's home network (1).

14. A method as claimed in claim 11, **characterized by** said at least one ATM RS (22) facilitating inter and intra mobility for access networks that do not have mobility management with location for roaming MTs.

15. A method as claimed in any of claims 11 to 14, **characterized by**:
- said at least one ATM RS (22) including a database; and
- storing, in said database, data relating to:
- a network address for said LS (3); and
- mappings between home network addresses and temporary visited network addresses for each of said MTs.

16. A method as claimed in claim 15, **characterized by** storing an address for an authentication server in said database of said at least one ATM RS (22).

17. A method as claimed in any of claims 11 to 16, **characterized by:**
- each MT (4) including a database; and
- storing, in the database of each MT, data relating to:
- a network address for an ATM RS (22) with which a respective MT (4) is associated; and
- the MT's home network address, authentication key and access rights;
stored data relating to a home network address including data concerning a MAS (6) in the MT's home network (1) with which a respective MT (4) is associated.

18. A method as claimed in claim 17, **characterized by** storing temporary data in the database of each MT (4), said temporary data including the MT's current address, current Local Area Network, LAC, and, current Radio Port identification, RP_id.

19. A method as claimed in any of claims 11 to 18, **characterized by**:
- said LS (3) including a database for storing data for each MT (4);
- updating said LS's database with the location of a MT, when the MT first moves to and registers with another network (2); and
- storing subsequent location updates for said roaming MT in the database of said at least one ATM RS (22).

20. A method as claimed in claim 19, **characterized by** storing the following data in said LS's database for each of said MTs:
- a home network address;
- a current address;
- user profile, including access rights; and
- location status.

21. A method as claimed in claim 20, **characterized by** storing billing information for each MT (4) in database of said LS (3).

22. A method as claimed in any of claims 11 to 21, for handling location updates in a MT's home network (1), when said MT (4) first visits another visited network (2), **characterized by**:
- said MT (4) registering with said visited network by transmitting a location update signal to a first MAS (8) of said visited network (2) via a Radio Port, RP, of said first MAS's Access Point (10), AP,
- said first MAS, on receipt of the signal from said MT (4), sending a location update signal to an ATM RS (22) with which said MT is associated in said home network(1);
- said ATM RS (22), on said receipt of said location update signal:
- updating its database with a temporary address for said MT (4); and
- sending a location update signal to said home network's Location Server (3), LS.

23. A method as claimed in any of claims 11 to 21, for handling location updates in a MT's home network, when said MT (4) has registered with a visited network and moves between first and second MASs (8, 9) in said visited network (2), **characterized by**:
- said MT (4) having a temporary address, stored in a database thereof, that identifies a network address of an ATM RS (22) with which said MT (4) is associated in its home network (1);
- said MT (4), on moving from said first to said second MAS, sending a location update signal to said second MAS via a Radio Port, RP, of said second MAS's Access Point,AP;
- said second MAS, on receipt of the signal from said MT, sending a location update signal to said ATM RS (22) in said home network; and
- said ATM RS (22) on receipt of this information, updating its database with the temporary address for said MT (4), location update of said home network's LS (3) not being necessary when said MT has been registered with and is roaming within said visited network (2).

24. A method as claimed in any of claims 11 to 23, **characterized by**:
- said ATM network providing a plurality of ATM RSs (22) for handling location mobility; and
- dynamically selecting that one of said plurality of ATM RSs considered by said ATM network to be best suited, at the particular time, to handle location mobility for a roaming MT (4).

25. A method as claimed in claim 24, when appended to either claim 22, or claim 23, **characterized by** said home network (1) being adapted to dynamically redirect incoming location updates for a roaming MT (4) from an ATM RS (22), with which said MT (4) is presently associated in said home network (1), to another ATM RS (22) best suited to handle location updates for said MT (4).

26. A method as claimed in claim 25, **characterized by**:
- said roaming MT (4) sending said location update signal in a manner as claimed in claim 22 or claim 23, from the visited network (2) to said ATM RS (22) in said home network (1) with which said roaming MT (4) is presently associated;
- said home network (1), in response to receipt of said location update signal from said roaming MT (4), sending said roaming MT (4) a location update reply containing a home network address for use by said roaming MT (4) the next time it sends a location update signal to said home network (1); and
- said home network address, contained in said location update reply, being an address to an ATM RS (22) best suited, at the particular time, to handle location mobility for said roaming MT (4).

27. A method for setting up a call from a Fixed Terminal, FT, of a Private Network to Network Interface, PNNI, network without mobility support, to a MT of an ATM network as claimed in any of claims 1 to 10, when said MT is visiting another network, **characterized by**:
- said FT (17) sending a call setup message to a MAS (6) in said home network (1) with which said MT (4) is associated;
- said home network MAS (6), on receipt of said message from said FT (17), sending an enquiry to said home network's Location Server (3), LS, concerning the present location of said MT (4);
- said LS (3) in response to said enquiry, sending to said home network MAS (6) the network address information of an ATM RS (22) in said home network (1) with which said MT is associated;
- said home network MAS (6), on receipt of the address information, sending a call setup message to said ATM RS (22);
- said ATM RS (22), on receipt of the said call setup message, checking its database to find the present address of said MT (4) and, on finding the address, sending a call setup message to a MAS (8) in said visited network (2) with which said MT (4) is currently associated; and
- on receipt of said call setup message, said visited network MAS (8) setting up the call from said FT (17) to said MT (4).

## Patentansprüche

1. ATM-Netz, das dazu ausgebildet ist, mobile ATM-Endpunkte zu unterstützen, das eine Anzahl von mobilen Endgeräten (4), MTs [Mobile Terminals]; ein Kernnetz von ATM-Schaltern (5); Mobilitäts-Verwaltungsmittel, die einen Standortserver (3), LS [Location Server], einschließen, welcher LS (3) eine Standortdatenbank für die MTs einschließt und dazu ausgebildet ist, Standortauflösung zu liefern; wenigstens einen in der Mobilität verstärkten ATM-Schalter (6), MAS; und einen Zugangspunkt (7), AP [Access Point], für den wenigstens einen MAS (6) einschließt, welcher AP (7) dazu ausgebildet ist, Funkverknüpfbarkeit zwischen einem MT (4) und dem ATM-Netz zu schaffen und auf seiner Funkseite wenigstens einen Funkanschluss und auf seiner Netzseite eine ATM-Schnittstelle und verknüpfte Signalisierkanäle zu dem wenigstens einen MAS (6) mit Schaltfähigkeit hat, **dadurch gekennzeichnet, dass** das ATM-Netz wenigstens einen ATM-Roamingserver (22), RS, einschließt, der dazu ausgebildet ist, Standortaktualisierungen für ein Roaming durchführendes MT (4) zu handhaben, wodurch eine Verringerung der Signalisierungslast auf dem Heimnetz (1) des MTs zum Handhaben von Standortaktualisierungen in dem Heimnetz (1) des MTs bewirkt wird, wenn der MT (4) zuerst einen anderes besuchtes Netz (2) besucht,
- wobei der MT (4) sich bei dem besuchten Netz (2) **dadurch** registriert, dass er ein Standortaktualisierungssignal zu einem ersten MAS (8) des besuchten Netzes über einen Funkanschluss, RP [Radio Port] sendet,
- wobei der erste MAS (8) bei Empfang des Signals von dem MT (4) ein Standortaktualisierungssignal zu einem ATM-RS sendet, mit dem der MT (4) in dem Heimnetz (1) verknüpft ist,
- wobei der ATM-RS (22) bei Empfang des Standortaktualisierungssignals:
- seine Datenbank mit einer temporären Adresse für das MT (4) aktualisiert; und
- ein Standortaktualisierungssignal zu dem LS (3) des Heimnetzes (1) sendet.

2. ATM-Netz nach Anspruch 1, **dadurch gekennzeichnet, dass** der wenigstens eine ATM-RS einen ATM-Schalter einschließt, mit dem ein Standortserver verknüpft ist.

3. ATM-Netz nach Anspruch 1 oder 2, **dadurch gekennzeichnet, dass** der wenigstens eine ATM-RS eine Datenbank einschließt, die dazu ausgebildet ist, eine Netzadresse für den LS (29) und Abbildungen zwischen Netzadressen und temporären besuchten Netzadressen für jedes der MT zu speichern.

4. ATM-Netz nach Anspruch 3, **dadurch gekennzeichnet, dass** die Datenbank des wenigstens einen ATM-RS (22) dazu ausgebildet ist, eine Adresse eines Authentifizierungsservers zu speichern.

5. ATM-Netz nach einem vorangehenden Anspruch, **dadurch gekennzeichnet, dass** jedes MT (4) eine Datenbank einschließt, die dazu ausgebildet ist, Daten, die sich auf eine Heimnetzadresse für einen ATM-RS (22), mit dem ein entsprechendes MT verknüpft ist, und die Heimnetzadresse des MT, Authentifizierungsschlüssel und Zugangsrechte beziehen, zu speichern, und dass die Heimnetzadresse Daten einschließt, die einen MAS (6) im Heimnetz (1) des MT betreffen, mit dem der MT (4) verknüpft ist.

6. ATM-Netz nach Anspruch 5, **dadurch gekennzeichnet, dass** die Datenbank jedes MTs ist dazu ausgebildet ist, temporäre Daten einschließlich der gegenwärtigen Adresse des MTs, des gegenwärtigen lokalen Netzes, LAC [Local Area Network], und der gegenwärtigen Funkanschlussidentifizierung, RP-id zu speichern.

7. ATM-Netz nach einem vorangehenden Anspruch, **dadurch gekennzeichnet, dass** der LS (3) eine Datenbank einschließt, die dazu ausgebildet ist, Daten für jedes MT (4) zu speichern, und dass das Netz dazu ausgebildet ist, die Datenbank des LS (3) mit dem Standort eines MTs (4) aktualisieren, wenn sich das MT (4) zuerst zu einem anderen Netz bewegt und sich damit registriert, wobei die Datenbank des wenigstens einen ATM-RS (22) dazu ausgebildet ist, anschließende Standortaktualisierungen für das MT (4) zu speichern.

8. ATM-Netz nach Anspruch 7, **dadurch gekennzeichnet, dass** Daten, die in der Datenbank des LS (3) gespeichert sind, die Heimnetzadresse, die gegenwärtig besuchte Netzadresse, Benutzerprofil, einschließlich Zugangsrechten und Standortstatus einschließen.

9. ATM-Netz nach Anspruch 8, **dadurch gekennzeichnet, dass** Daten, die in der Datenbank des LS gespeichert sind, für jedes MT (4) Rechnungsstellungsinformation einschließen.

10. ATM-Netz nach einem der der vorangehenden Ansprüche, **dadurch gekennzeichnet, dass** das ATM-Netz eine Mehrzahl von ATM-RS (22) einschließt und dazu ausgebildet ist, dynamisch den einen der Mehrzahl der ATM-RS auszuwählen, der durch das ATM-Netz zu dem besonderen Zeitpunkt als am besten geeignet angesehen wird, Standortmobilität für ein Roaming durchführendes mobiles Endgerät (4) zu handhaben.

11. Verfahren zum Handhaben von Mobilität in einem ATM-Netz, das dazu ausgebildet ist, mobile ATM-Endpunkte zu unterstützen, welches Netz einschließt:
- eine Anzahl von mobilen Endgeräten (4);
- ein Kernnetz von ATM-Schaltern (6);
- Mobilitätshandhabungsmittel, die einen Standortserver (3), LS, einschließen, welcher LS (3) eine Datenbank für die MTs einschließt und dazu ausgebildet ist, standortauflösung zu liefern;
- wenigstens einen in der Mobilität verstärkten ATM-Schalter (6), MAS; und
- einen Zugangspunkt (7), AP, für den wenigstens einen MAS (6), welcher AP (7) dazu ausgebildet ist, Funkverknüpfbarkeit zwischen einem MT und dem ATM-Netz zu schaffen und auf seiner Funkseite wenigstens einen Funkanschluss und auf seiner Netzseite eine ATM-Schnittstelle und verknüpfte Signalisierkanäle zu dem wenigstens einen MAS mit Schaltfähigkeit hat, **dadurch gekennzeichnet, dass** das ATM-Netz wenigstens einen ATM-Roamingserver (22), RS, zur Verfügung stellt, um Standortaktualisierungen für ein Roaming durchführendes MT (4) zu handhaben, wodurch eine Verringerung der Signalisierungslast auf dem Heimnetz (1) des MTs zum Handhaben von Standortaktualisierungen in einem Heimnetz (1) des MTs bewirkt wird, wenn der MT (4) zuerst ein anderes besuchtes Netz (2) besucht, und **dadurch**
- dass der MT (4) sich bei dem anderen Netz (2) **dadurch** registriert, dass er ein Standortaktualisierungssignal zu einem ersten MAS (8) des besuchten Netzes (2) über einen Funkanschluss, RP, des Zugangspunktes (10), AP, des ersten MAS sendet;
- dass der erste MAS (8) bei Empfang des Signals von dem MT (4) ein Standortaktualisierungssignal zu einem ATM-RS (22) sendet, mit dem der MT (4) in dem Heimnetz (1) verknüpft ist;
- dass der ATM-RS (22) bei Empfang des Standortaktualisierungssignals:
- seine Datenbank mit einer temporären Adresse für das MT (4) aktualisiert; und
- ein Standortaktualisierungssignal zu dem Standortserver (3), LS, des Heimnetzes (1) sendet.

12. Verfahren nach Anspruch 11, **dadurch gekennzeichnet, dass** der wenigstens eine ATM-RS Mobilität in dem ATM-Netz handhabt.

13. Verfahren nach Anspruch 11, **dadurch gekennzeichnet, dass** der wenigstens eine ATM-RS eine Einrichtung zur Verfügung stellt, die es einem MT (4) ermöglicht, ein anderes ATM-Netz (2) zu besuchen und darin Roaming durchzuführen, ohne beträchtlich die Signalisierungslast auf dem Heimnetz (1) des MTs zu erhöhen.

14. Verfahren nach Anspruch 11, **dadurch gekennzeichnet, dass** der wenigstens eine ATM-RS (22) Mobilität für Zugangsnetze zwischen diesen und innerhalb derselben ermöglicht, die keine Mobilitätsverwaltung mit Standort für Roaming durchführende MTs haben.

15. Verfahren nach an einem der Ansprüche 11 bis 14, **dadurch gekennzeichnet, dass**:
- der wenigstens eine ATM-RS (22) eine Datenbank einschließt; und
- in der Datenbank Daten speichert, die sich beziehen auf:
- eine Netzadresse für den LS (3); und
- Abbildungen zwischen Heimnetzadressen und temporär besuchten Netzadressen für jedes der MTs.

16. Verfahren nach Anspruch 15, **gekennzeichnet durch** Speichern einer Adresse für eine Authentifizierung in der Datenbank des wenigstens einen ATM-RS (22).

17. Verfahren nach einem der Ansprüche 11 bis 16, **dadurch gekennzeichnet, dass**:
- jeder MT (4) eine Datenbank einschließt; und
- in der Datenbank für jeden MT Daten gespeichert werden, die sich beziehen auf:
- eine Netzadresse für einen ATM-RS (22), mit dem ein entsprechendes MT (4) verknüpft ist; und
- die Heimnetzadresse des MT, Authentifizierungsschlüssel und Zugangsrechte;
dass gespeicherte Daten, die sich auf eine Heimnetzadresse beziehen, Daten einschließen, die einen MAS (6) im Heimnetz (1) des MT betreffen, mit dem ein entsprechender MT (4) verknüpft ist.

18. Verfahren nach Anspruch 17, **gekennzeichnet durch** temporäres Speichern von Daten in der Datenbank jedes MT (4) welche temporären Daten die gegenwärtige Adresse des MT, das gegenwärtige lokalen Netz, LAC, und die gegenwärtige Funkanschlussidentifizierung, RP-id, betreffen.

19. Verfahren nach einem der Ansprüche 11 bis 18, **dadurch gekennzeichnet, dass**:
- der LS (3) eine Datenbank zum Speichern von Daten für jedes MT (4) einschließt;
- dass die Datenbank des LS mit dem Standort eines MT aktualisiert wird, wenn das MT sich zuerst zu einem anderen Netz (2) bewegt und sich damit registriert; und
- dass anschließende Standortaktualisierungen für das Roaming durchführende MT in der Datenbank des wenigstens einen ATM-RS (22) gespeichert werden.

20. Verfahren nach Anspruch 19, **gekennzeichnet durch** Speichern der folgenden Daten in der Datenbank des LS für jedes der MT:
- einer Heimnetzadresse;
- einer gegenwärtigen Adresse;
- Benutzerprofils, einschließlich Zugangsrechten; und
- Standortstatus.

21. Verfahren nach Anspruch 20, **gekennzeichnet durch** Speichern von Rechnungsstellungsinformation für jedes MT (4) in der Datenbank des LS (3).

22. Verfahren nach einem der Ansprüche 11 bis 21 zum Handhaben von Lokalisierungsaktualisierungen in einem Heimnetz (1) eines MT, wenn der MT (4) zuerst ein anderes besuchtes Netzwerk (2) besucht, **dadurch gekennzeichnet, dass**:
- das MT (4) sich bei dem besuchten Netz **dadurch** registriert, dass ein Standortaktualisierungssignal zu einem ersten MAS (8) des besuchten Netzes (2) über einen Funkanschluss, RP, des Zugangspunktes (10), AP, des ersten MAS gesendet wird;
- der erste MAS bei Empfang des Signals vom MT (4) ein Standortaktualisierungssignal zu einem ATM-RS (22) sendet, mit dem das MT in dem Heimnetz (1) verknüpft ist;
- der ATM-RS (22) bei Empfang des Standortaktualisierungssignals:
- seine Datenbank mit einer temporären Adresse für das MT (4) aktualisiert; und
- ein Standortaktualisierungssignal zu dem Standortserver (3), LS, sendet.

23. Verfahren nach einem der Ansprüche 11 bis 21 zum Handhaben von Standortaktualisierungen in einem Heimnetz eines MT, wenn sich das MT (4) bei einem besuchten Netz registriert hat und sich zwischen ersten und zweiten MAS (8, 9) in dem besuchten Netz (2) bewegt, **dadurch gekennzeichnet, dass**
- das MT (4) eine temporäre Adresse hat, die in seiner Datenbank gespeichert ist, die eine Netzadresse eines ATM-RS (22) identifiziert, mit dem das MT (4) in seinem Heimnetz (1) verknüpft ist;
- das MT (4), wenn es sich von dem ersten zum zweiten MAS bewegt, ein Standortaktualisierungssignals zu dem zweiten MAS über einen Funkanschluss, RP, des Zugangspunktes, AP, des zweiten MAS sendet;
- der zweite MAS bei Empfang des Signals.von dem MT ein Standardaktualisierungssignal zu dem ATM-RS (22) in dem Heimnetz Sendet; und
- der ATM-RS (22) bei Empfang dieser Information seine Datenbank mit der temporären Adresse für das MT (4) aktualisiert, wobei Standortaktualisierung des LS (3) des Heimnetzes nicht notwendig ist, wenn das MT bei dem besuchten Netz (2) registriert ist und darin Roaming durchführt.

24. Verfahren nach einem der Ansprüche 11 bis 23, **dadurch gekennzeichnet, dass**
- das ATM-Netz eine Mehrzahl von ATM-RS (22) zum Handhaben von Standortmobilität zur Verfügung stellt; und
- dynamisch denjenigen der Mehrzahl von ATM-RS auswählt, der durch das ATM-Netz als der zu dem besonderen Zeitpunkt am besten geeignete angesehen wird, um Standortmobilität für ein Roaming durchführendes MT (4) handzuhaben.

25. Verfahren nach Anspruch 24, wenn abhängig entweder von Anspruch 22 oder Anspruch 23, **dadurch gekennzeichnet, dass** das Heimnetz (1) dazu ausgebildet ist, dynamisch ankommende Standortaktualisierungen für ein Roaming durchführendes MT (4) von einem ATM-RS (22), mit dem das MT (4) gegenwärtig in dem Heimnetz (1) verknüpft ist, zu einem anderen ATM-RS umzuleiten, der am besten geeignet ist, Standortaktualisierungen für das MT (4) zu handhaben.

26. Verfahren nach Anspruch 25, **dadurch gekennzeichnet, dass**:
- das Roaming durchführende MT (4) ein Standortaktualisierungssignal in einer Weise, wie dies in Anspruch 22 oder Anspruch 23 beansprucht wird, von dem besuchten Netz (2) zu dem ATM-RS (22) in dem Heimnetz (1) sendet, mit dem das Roaming durchführende MT (4) gegenwärtig verknüpft ist;
- das Heimnetz (1) als Reaktion auf Empfang des Standortaktualisierungseignals vom Roaming durchführenden MT (4) dem Roaming durchführenden MT (4) eine Aktualisierungsantwort sendet, die eine Heimnetzadresse für Verwendung durch das Roaming durchführende MT (4) enthält, wenn dieses das nächste Mal sein Standortaktualisierungssignal zu dem Heimnetz (1) sendet; und
- die Heimnetzadresse, die in der Standortaktualisierungsantwort enthalten ist, eine Adresse zu einem ATM-RS (22) ist, der zu dem besonderen Zeitpunkt am besten geeignet ist, Standortmobilität für das Roaming durchführende MT (4) zu handhaben.

27. Verfahren zum Einrichten eines Rufes von einem festen Endgerät, FT [Fixed Terminal], eines Netzes mit privater Netz-zu-Netzschnittstelle, PNNI [Private Network to Network Interface], ohne Mobilitätsunterstützung zu einem MT eines ATM-Netzes, wie es in einem der Ansprüche 1 bis 10 beansprucht ist, wenn das MT ein anderes Netz besucht, **dadurch gekennzeichnet, dass**:
- das FT (17) eine Rufeinrichtungsmeldung an einen MAS (6) in dem Heimnetz (1) sendet, mit dem das MT (4) verknüpft ist;
- der MAS (6) des Heimnetzes bei Empfang der Meldung von dem FT (17) eine Anfrage an den Standortserver (3), LS, des Heimnetzes richtet, die den gegenwärtigen Standort des MT (4) betrifft;
- der LS (3) als Reaktion auf die Anfrage zu dem MAS (6) des Heimnetzes die Netzadresse in Information eines ATM-RS (22) in dem Heimnetz (1) sendet, mit dem das MT verknüpft ist;
- der MAS (6) des Heimnetzes bei Empfang der Adresseninformation eine Rufeinrichtungsmeldung an den ATM-RS (22) sendet;
- der ATM-RS (22) bei Empfang der Rufeinreichtungsmeldung seine Datenbank überprüft, um die gegenwärtige Adresse des MT (4) zu finden und, wenn er die Adresse findet, eine Rufeinrichtungsmeldung an den MAS (8) in dem besuchten Netz (2) sendet, mit dem das MT (4) gegenwärtig verknüpft ist; und
- bei Empfang der Rufeinrichtungsmeldung der MAS (8) des besuchten Netzes den Ruf von dem FT (17) zu dem MT (4) einrichtet.

## Revendications

1. Réseau ATM, adapté pour supporter des points d'extrémité ATM mobiles comprenant un certain nombre de terminaux mobiles (4), MTs ; un réseau coeur de commutateurs ATM (5), des moyens de gestion de la mobilité comprenant un serveur de localisation (3), LS, ledit LS (3) comprenant une base de données de localisation pour lesdits MTs et étant adapté pour fournir une résolution de localisation ; au moins un commutateur ATM à mobilité améliorée (6), MAS ; et un point d'accès (7), AP, pour ledit au moins un MAS (6), ledit AP (7) étant adapté pour fournir une connectivité radio entre un MT (4) et ledit réseau ATM et ayant, du côté radio, au moins un port radio et, du côté réseau, une interface ATM et des canaux de signalisation associés vers ledit au moins un MAS (6) avec une capacité de commutation, **caractérisé en ce que** ledit réseau ATM comprend au moins un serveur itinérant ATM (22), RS, adapté pour prendre en charge des mises à jour de localisation pour un MT itinérant (4), effectuant ainsi une réduction de la charge de signalisation sur le réseau nominal (1) dudit MT pour prendre en charge des mises à jour de localisation dans le réseau nominal (1) d'un MT, lorsque ledit MT (4) visite pour la première fois un autre réseau visité (2),
- ledit MT (4) s'enregistrant auprès dudit réseau visité (2) en transmettant un signal de mise à jour de localisation à un premier MAS (8) dudit réseau visité via un port radio, RP, de l'AP (10) dudit premier MAS,
- ledit premier MAS (8) à la réception du signal provenant dudit MT (4), envoyant un signal de mise à jour de localisation à un RS ATM auquel ledit MT (4) est associé dans ledit réseau nominal (1),
- ledit RS ATM (22), à la réception dudit signal de mise à jour de localisation :
- mettant à jour sa base de données avec une adresse temporaire pour ledit MT (4) ; et
- envoyant un signal de mise à jour de localisation au LS (3) dudit réseau nominal (1).

2. Réseau ATM selon la revendication 1, **caractérisé en ce que** ledit au moins un RS ATM comprend un commutateur ATM ayant un serveur de localisation qui lui est associé.

3. Réseau ATM selon la revendication 1 ou 2, **caractérisé en ce que** ledit au moins un RS ATM comprend une base de données adaptée pour stocker une adresse de réseau pour ledit LS (29) et des mappages entre des adresses de réseau et des adresses de réseau visité temporaires pour chacun desdits MTs.

4. Réseau ATM selon la revendication 3,
**caractérisé en ce que** ladite base de données dudit au moins un RS ATM (22) est adaptée pour stocker une adresse d'un serveur d'authentification.

5. Réseau ATM selon l'une quelconque des revendications précédentes, **caractérisé en ce que** chaque MT (4) comprend une base de données adaptée pour stocker des données relatives à une adresse de réseau nominal pour un RS ATM (22) auquel un MT respectif est associé, et l'adresse de réseau nominal, la clé d'authentification et les droits d'accès du MT, et **en ce que** ladite adresse de réseau nominal comprend des données concernant un MAS (6) dans le réseau nominal (1) du MT, auquel le MT (4) est associé.

6. Réseau ATM selon la revendication 5, **caractérisé en ce que** ladite base de données de chaque MT est adaptée pour stocker des données temporaires, comprenant l'adresse actuelle, le réseau local actuel, LAC, et l'identification du port radio actuel, RP-id, du MT.

7. Réseau ATM selon l'une quelconque des revendications précédentes, **caractérisé en ce que** ledit LS (3) comprend une base de données adaptée pour stocker des données pour chaque MT (4), et **en ce que** ledit réseau est adapté pour mettre à jour la base de données dudit LS (3) avec la localisation d'un MT (4) lorsque le MT (4) se déplace pour la première fois, et s'enregistre auprès d'un autre réseau, la base de données dudit au moins un RS ATM (22) étant adaptée pour stocker des mises à jour de localisation subséquente pour le MT (4).

8. Réseau ATM selon la revendication 7, **caractérisé en ce que** les données stockées dans la base de données dudit LS (3) comprennent l'adresse de réseau nominal, l'adresse de réseau visité actuelle, le profil d'utilisateur, incluant les droits d'accès, et le statut de localisation.

9. Réseau ATM selon la revendication 8, **caractérisé en ce que** les données stockées dans la base de données dudit LS, pour chaque MT (4), comprennent des informations de facturation.

10. Réseau ATM selon l'une quelconque des revendications précédentes, **caractérisé en ce que** le réseau ATM comprend une pluralité de RSs ATM (22) et est adapté pour sélectionner dynamiquement celui de ladite pluralité de RSs ATM considéré par ledit réseau ATM comme étant le mieux approprié, au moment particulier, pour prendre en charge la mobilité de la localisation pour un terminal mobile itinérant (4).

11. Procédé pour prendre en charge la mobilité dans un réseau ATM, adapté pour supporter des points d'extrémité ATM mobiles, ledit réseau comprenant :
- un certain nombre de terminaux mobiles (4),
- un réseau coeur de commutateurs ATM (6) ;
- des moyens de gestion de la mobilité comprenant un serveur de localisation (3), LS, ledit LS (3) comprenant une base de données de localisation pour lesdits MTs et étant adapté pour fournir une résolution de localisation ;
- au moins un commutateur ATM à mobilité améliorée (6), MAS ; et
- un point d'accès (7), AP, pour ledit au moins un MAS (6), ledit AP (7) étant adapté pour fournir une connectivité radio entre un MT et ledit réseau ATM et ayant, du côté radio, au moins un port radio et, du côté réseau, une interface ATM et des canaux de signalisation associés vers ledit au moins un MAS avec une capacité de commutation,
**caractérisé par** ledit réseau ATM fournissant au moins un serveur itinérant ATM (22), RS, pour prendre en charge des mises à jour de localisation pour un MT itinérant (4), effectuant ainsi une réduction de la charge de signalisation sur le réseau nominal (1) dudit MT pour prendre en charge des mises à jour de localisation dans le réseau nominal (1) d'un MT, lorsque ledit MT (4) visite pour la première fois un autre réseau visité (2) et par :
- ledit MT (4) s'enregistrant auprès dudit un autre réseau (2) en transmettant un signal de mise à jour de localisation à un premier MAS (8) dudit réseau visité (2) via un port radio, RP, du point d'accès (10), AP, dudit premier MAS ;
- ledit premier MAS (8), à la réception du signal provenant dudit MT (4), envoyant un signal de mise à jour de localisation à un RS ATM (22) auquel ledit MT (4) est associé dans ledit réseau nominal (1) ;
- ledit RS ATM (22), à la réception dudit signal de mise à jour de localisation :
- mettant à jour sa base de données avec une adresse temporaire pour ledit MT (4) ; et
- envoyant un signal de mise à jour de localisation au serveur de localisation (3), LS, dudit réseau nominal.

12. Procédé selon la revendication 11, **caractérisé par** ledit au moins un RS ATM prenant en charge la mobilité dans ledit réseau ATM.

13. Procédé selon la revendication 11, **caractérisé par** ledit au moins un RS ATM fournissant une fonction qui permet à un MT (4) de visiter, et d'itinérer à l'intérieur d'un autre réseau ATM (2), sans augmenter significativement la charge de signalisation sur le réseau nominal (1) dudit MT.

14. Procédé selon la revendication 11, **caractérisé par** ledit au moins un RS ATM (22) facilitant l'inter et l'intra mobilité pour les réseaux d'accès qui n'ont pas la gestion de la mobilité avec la localisation pour les MTs itinérants.

15. Procédé selon l'une quelconque des revendications 11 à 14, **caractérisé par** :
- ledit au moins un RS ATM (22) comprenant une base de données ; et
- le stockage, dans ladite base de données, de données relatives à :
- une adresse de réseau pour ledit LS (3) ; et
- des mappages entre des adresses de réseau nominal et des adresses de réseau visité temporaires pour chacun desdits MTs.

16. Procédé selon la revendication 15, **caractérisé par** le stockage d'une adresse pour un serveur d'authentification dans ladite base de données dudit au moins un RS ATM (22).

17. Procédé selon l'une quelconque des revendications 11 à 16, **caractérisé par** :
- chaque MT (4) comprenant une base de données ; et
- le stockage, dans la base de données de chaque MT, de données relatives à :
- une adresse de réseau pour un RS ATM (22) auquel un MT respectif (4) est associé ; et
- l'adresse de réseau nominal, la clé d'authentification et les droits d'accès du MT ;
les données stockées relatives à une adresse de réseau nominal comprenant des données concernant un MAS (6) dans le réseau nominal (1) du MT auquel un MT respectif (4) est associé.

18. Procédé selon la revendication 17, **caractérisé par** le stockage de données temporaires dans la base de données de chaque MT (4), lesdites données temporaires comprenant l'adresse actuelle, le réseau local actuel, LAC, et l'identification du port radio actuel, RP_id, du MT.

19. Procédé selon l'une quelconque des revendications 11 à 18, **caractérisé par** :
- ledit LS (3) comprenant une base de données pour stocker des données pour chaque MT (4) ;
- la mise à jour de la base de données dudit LS avec la localisation d'un MT, lorsque le MT se déplace pour la première fois et s'enregistre auprès d'un autre réseau (2) ; et
- le stockage de mises à jour de localisation subséquente pour ledit MT itinérant dans la base de données dudit au moins un RS ATM (22).

20. Procédé selon la revendication 19, **caractérisé par** le stockage des données suivantes dans la base de données dudit LS pour chacun desdits MTs :
- une adresse de réseau nominal ;
- une adresse actuelle ;
- un profil d'utilisateur, incluant des droits d'accès ; et
- un statut de localisation.

21. Procédé selon la revendication 20, **caractérisé par** le stockage d'informations de facturation pour chaque MT (4) dans la base de données dudit LS (3).

22. Procédé selon l'une quelconque des revendications 11 à 21, pour prendre en charge les mises à jour de localisation dans le réseau nominal (1) d'un MT, lorsque ledit MT (4) visite pour la première fois un autre réseau visité (2), **caractérisé par** :
- ledit MT (4) s'enregistrant auprès dudit réseau visité en transmettant un signal de mise à jour de localisation à un premier MAS (8) dudit réseau visité (2) via un port radio, RP, du point d'accès (10), AP, dudit premier MAS ;
- ledit premier MAS, à la réception du signal provenant dudit MT (4), envoyant un signal de mise à jour de localisation à un RS ATM (22) auquel ledit MT est associé dans ledit réseau nominal (1) ;
- ledit RS ATM (22), à ladite réception dudit signal de mise à jour de localisation :
- mettant à jour sa base de données avec une adresse temporaire pour ledit MT (4) ; et
- envoyant un signal de mise à jour de localisation au serveur de localisation (3), LS, dudit réseau nominal.

23. Procédé selon l'une quelconque des revendications 11 à 21, pour prendre en charge les mises à jour de localisation dans le réseau nominal d'un MT, lorsque ledit MT (4) s'est enregistré auprès d'un réseau visité et se déplace entre des premier et second MASs (8, 9) dans ledit réseau visité (2), **caractérisé par** :
- ledit MT (4) ayant une adresse temporaire, stockée dans une base de données de celui-ci, qui identifie une adresse de réseau d'un RS ATM (22) auquel ledit MT (4) est associé dans son réseau nominal (1) ;
- ledit MT (4), lors du déplacement dudit premier audit second MAS, envoyant un signal de mise à jour de localisation audit second MAS via un port radio, RP, du point d"accès, AP, dudit second MAS ;
- ledit second MAS, à la réception du signal provenant dudit MT, envoyant un signal de mise à jour de localisation audit RS ATM (22) dans ledit réseau nominal ; et
- ledit RS ATM (22) à la réception de cette information, mettant à jour sa base de données avec l'adresse temporaire pour ledit MT (4), la mise à jour de la localisation du LS (3) dudit réseau nominal n'étant pas nécessaire lorsque ledit MT s'est enregistré auprès et itinère à l'intérieur dudit réseau visité (2).

24. Procédé selon l'une quelconque des revendications 11 à 23, **caractérisé par** :
- ledit réseau ATM fournissant une pluralité de RSs ATM (22) pour prendre en charge la mobilité de la localisation ; et
- la sélection dynamique de celui de ladite pluralité de RSs ATM considéré par ledit réseau ATM comme étant le mieux approprié, au moment particulier, pour prendre en charge la mobilité de la localisation pour un MT itinérant (4).

25. Procédé selon la revendication 24, lorsque jointe soit à la revendication 22, soit à la revendication 23, **caractérisé par** ledit réseau nominal (1) étant adapté pour rediriger dynamiquement des mises à jour de localisation entrantes pour un MT itinérant (4) d'un RS ATM (22), auquel ledit MT (4) est à présent associé dans ledit réseau nominal (1), à un autre RS ATM (22) mieux approprié pour prendre en charge des mises à jour de localisation pour ledit MT (4).

26. Procédé selon la revendication 25, **caractérisé par** :
- ledit MT itinérant (4) envoyant ledit signal de mise à jour de localisation d'une manière telle que revendiquée dans la revendication 22 ou la revendication 23, du réseau visité (2) audit RS ATM (22) dans ledit réseau nominal (1) auquel ledit MT itinérant (4) est à présent associé ;
- ledit réseau nominal (1), en réponse à la réception dudit signal de mise à jour de localisation provenant dudit MT itinérant (4), envoyant audit MT itinérant (4) une réponse de mise à jour de localisation contenant une adresse de réseau nominal pour l'utilisation par ledit MT itinérant (4) la prochaine fois qu'il enverra un signal de mise à jour de localisation audit réseau nominal (1) ; et
- ladite adresse de réseau nominal, contenue dans ladite réponse de mise à jour de localisation, étant une adresse d'un RS ATM (22) mieux approprié, au moment particulier, pour prendre en charge la mobilité de la localisation pour ledit MT itinérant (4).

27. Procédé pour établir un appel d'un terminal fixe, FT, d'un réseau PNNI, interface réseau-réseau privée sans support de mobilité, à un MT d'un réseau ATM tel que revendiqué dans l'une quelconque des revendications 1 à 10, lorsque ledit MT visite un autre réseau, **caractérisé par** :
- ledit FT (17) envoyant un message d'établissement d'appel à un MAS (6) dans ledit réseau nominal (1) auquel ledit MT (4) est associé ;
- le MAS (6) dudit réseau nominal, à la réception dudit message dudit FT (17), envoyant une demande au serveur de localisation (3), LS, dudit réseau nominal concernant la localisation présente dudit MT (4) ;
- ledit LS (3) en réponse à ladite demande, envoyant au MAS (6) dudit réseau nominal l'information d'adresse de réseau d'un RS ATM (22) dans ledit réseau nominal (1) auquel ledit MT est associé ;
- le MAS (6) dudit réseau nominal, à la réception de l'information d'adresse, envoyant un message d'établissement d'appel audit RS ATM (22) ;
- ledit RS ATM (22), à la réception dudit message d'établissement d'appel, vérifiant sa base de données pour trouver l'adresse présente dudit MT (4) et, en trouvant l'adresse, envoyant un message d'établissement d'appel à un MAS (8) dans ledit réseau visité (2) auquel ledit MT (4) est actuellement associé ; et
- à la réception dudit message d'établissement d'appel, le MAS (8) dudit réseau visité établissant l'appel dudit FT (17) audit MT (4).
